# EUROPÄISCHE PATENTSCHRIFT

(11) **EP 4 505 328 B1**
(45) Veröffentlichungstag und Bekanntmachung des Hinweises auf die Patenterteilung: **04.06.2025**
(21) Anmeldenummer: 23735634.0
(22) Anmeldetag: 21.06.2023
(51) Int. Cl.: G06F 17/40, G06F 11/30, G06F 11/07

(54) **VERFAHREN ZUM VERARBEITEN VON LOGDATEIEN, DATENVERARBEITUNGSSYSTEM UND FAHRZEUG**
METHOD FOR PROCESSING LOG FILES, DATA PROCESSING SYSTEM AND VEHICLE
PROCÉDÉ DE TRAITEMENT DE FICHIERS JOURNAUX, SYSTÈME DE TRAITEMENT DE DONNÉES ET VÉHICULE

(30) Priorität: 05.07.2022 DE 102022002450
(43) Veröffentlichungstag der Anmeldung: 12.02.2025
(73) Patentinhaber: Mercedes-Benz Group AG, 70372 Stuttgart (DE)
(72) Erfinder: REDEL, Sergej, 73240 Wendlingen (DE)
(74) Vertreter: Novagraaf Group
(86) Internationale Anmeldenummer: PCT/EP2023/066886
(87) Internationale Veröffentlichungsnummer: WO 2024/008460

(56) Entgegenhaltungen:
- US-A1- 2020 192 779
- US-A1- 2021 112 085
- US-A1- 2021 226 973
- SCHUSTER ET AL: "Introducing the Microsoft Vista event log file format", DIGITAL INVESTIGATION, ELSEVIER, AMSTERDAM, NL, vol. 4, 24 July 2007 (2007-07-24), pages 65 - 72, XP022166451, ISSN: 1742-2876, DOI: 10.1016/J.DIIN.2007.06.015

## Beschreibung

Die Erfindung betrifft ein Verfahren zum Verarbeiten von Logdateien mit rechnergestützten Datenverarbeitungssystemen nach der im Oberbegriff von Anspruch 1 näher definierten Art, ein entsprechendes Datenverarbeitungssystem sowie ein Fahrzeug.

Grundvoraussetzung zur korrekten Betriebsweise eines informationstechnischen Systems sind das einwandfreie Zusammenspiel von Hardware und Software. Aufgrund eines Hardwaredefekts oder Fehlern im Programmcode, auch als Bug bezeichnet, kann die korrekte Funktionsweise eines informationstechnischen Systems eingeschränkt, fehlerhaft oder nicht möglich sein.

Aus diesem Grund werden insbesondere in der Entwicklung von Hardware- bzw. Softwarekomponenten aber auch im laufenden Betrieb eines informationstechnischen Systems Logdateien erzeugt, welche die vom informationstechnischen System vollführten Prozesse protokollieren. Eine Analyse dieser Logdateien ermöglicht es oftmals die Fehlerursache aufzufinden und entsprechend Maßnahmen zum Beheben der Fehlerursache wie das Anpassen eines Programmcodes durchzuführen.

Folgende Probleme treten im Zusammenhang mit dem Verarbeiten von Logdateien auf:
1. Je nach Ausführung des informationstechnischen Systems und dem zur Überwachung der auf dem informationstechnischen System ablaufenden Prozesse verwendeten Software, auch als Debugger bezeichnet, werden nach dem Auftreten eines Fehlers lediglich unvollständige Logdateien erzeugt, die nicht alle relevanten Systemparameter und/oder nicht den vollständigen relevanten Zeitraum abdecken. Oftmals sind lediglich die wichtigsten Parameter in einem Zeitfenster nahe des aufgetretenen Fehlers, also beispielsweise die letzte Minute bevor der Fehler aufgetreten ist, enthalten. Eine umfassende Problemanalyse kann dann nicht möglich sein, wenn die Ursache des Fehlers auf einen nicht protokollierten Systemparameter, insbesondere außerhalb des ausgegebenen Zeitfensters, zurückzuführen ist.
2. Logdateien können sehr viele Systemparameter, insbesondere für lange Beobachtungszeiträume, aufweisen. Das Auffinden eines bestimmten Systemparameters zu einem bestimmten Zeitpunkt kann dann sehr arbeitsintensiv sein. Selbst die Verwendung von Suchalgorithmen kann oftmals erst nach längerer Suche zum gewünschten Ergebnis führen, da zum Auffinden eines relevanten Abschnitts der Logdatei bereits eine Analyse des in der Logdatei gespeicherten und protokollierten Systemverhaltens erforderlich ist. Somit ist trotz des Verwendens von Such- und/oder Sortieralgorithmen ein manueller Aufwand für den Anwender erforderlich.
3. Oftmals werden Logdateien lediglich für ein laufendes informationstechnisches System vorgehalten, beispielsweise in einem flüchtigen Speichermedium, wie einem Arbeitsspeicher (RAM). Unter "Iaufend" oder "Laufzeit" wird im Folgenden die Zeitdauer verstanden, während der ein jeweiliges informationstechnische System zwischen einem Bootvorgang und einem Herunterfahrvorgang bzw. einem Absturz aktiviert ist. Die Zeitdauer während das informationstechnische System eine Überwachung durchführt und relevante Informationen in einer Logdatei speichert wird im Folgenden als "Systemüberwachung" bezeichnet. Während einer Laufzeit können eine oder auch mehrere Systemüberwachungen durchgeführt werden. Fährt das informationstechnische System herunter oder stürzt es ab, so kann auch die Logdatei für diese Laufzeit verloren gehen. Somit ist es nicht möglich zu rekonstruieren, in welchem Systemzustand sich das informationstechnische System vor dem Absturz befunden hat.

Verfahren und Vorrichtungen zum Erzeugen von Logdateien sind hinreichend bekannt. So offenbaren beispielsweise die WO 2012/106969 A1 und die CN 112286896 A Verfahren und Vorrichtungen zum Erzeugen und Speichern von Logdateien in einem komprimierten und konvertierten Format. Hierdurch lassen sich entsprechende Logdateien mit einem geringeren Speicherbedarf speichern sowie schneller schreiben und lesen. Eine Logdatei kann dabei auch kryptografisch verschlüsselt konvertiert werden, was ein Verarbeiten der Logdatei durch unautorisierte Dritte verhindert. Die eingangs erwähnten Probleme im Zusammenhang mit der Verarbeitung von Logdateien lassen sich hierdurch jedoch nicht beheben.

Ferner offenbart die US 2021/226973 A1 eine Vorrichtung, ein System und ein Verfahren zur Übertragung von Fahrzeug-Logs. Dabei wird ein Differenz-Log aus einem Fahrzeug-Log mit Hilfe eines Differenz-Erzeugungs-Log generiert. Das Differenz-Log wird anschließend zur Analyse an einen Server übermittelt.

Ferner offenbart die US 2021/112085 A1 eine Vorrichtung und ein Verfahren zur Verarbeitung von Informationen. Dabei können Kodierungsanweisungen auf eine Datei angewendet werden, um diese in ihrer Größe zu komprimieren. Bei der Datei kann es sich um ein Log handeln, wobei das Log in einen Header und eine Payload unterteilt ist. Das verwendete Log-Format kann als Information in den Header geschrieben sein. Ferner ist es vorgesehen ein kleines und ein großes Log zu erzeugen, wobei im großen Log mehr Informationen gespeichert sind, als im kleinen Log. Wird im kleinen Log ein Fehler erkannt, wird das große Log zur Analyse an eine weitere Vorrichtung zur Analyse übermittelt.

Ferner offenbart die US 2020/192779 A1 das Verwalten von Ereignis-Log-Informationen eines Speicher-Untersystems.

Zudem ist es beim Schreiben von Daten zum Vermeiden zu großer Dateien bekannt, eine neue Datei anzulegen, sobald eine zu schreibende Datei eine maximale vorgegebene Dateigröße erreicht. In diesem Zusammenhang wird verwiesen auf: SCHUSTER ET AL: "Introducing the Microsoft Vista event log file format", DIGITAL INVESTIGATION, ELSEVIER, AMSTERDAM, NL, Bd. 4, 24. Juli 2007 (2007-07-24), Seiten 65-72, XP022166451, ISSN: 1742-2876, DOI: 10.1016/J.DIIN.2007.06.015.

Der vorliegenden Erfindung liegt die Aufgabe zugrunde ein verbessertes Verfahren zum Verarbeiten von Logdateien mit rechnergestützten Datenverarbeitungssystemen sowie ein entsprechendes Datenverarbeitungssystem anzugeben, mit deren Hilfe sich die im vorigen beschriebenen Probleme zumindest abmildern, bevorzugt jedoch beheben lassen.

Erfindungsgemäß wird diese Aufgabe durch ein Verfahren zum Verarbeiten von Logdateien mit rechnergestützten Datenverarbeitungssystemen mit den Merkmalen des Anspruchs 1 und ein entsprechendes Datenverarbeitungssystem mit den Merkmalen des Anspruchs 10 gelöst. Vorteilhafte Ausgestaltungen und Weiterbildungen sowie ein Fahrzeug mit einem solchen Datenverarbeitungssystem oder einer Komponente eines solchen Datenverarbeitungssystems ergeben sich auch aus den hiervon abhängigen Ansprüchen.

Bei einem Verfahren zum Verarbeiten von Logdateien mit rechnergestützten Datenverarbeitungssystemen, wobei eine Logdatei von einem Datenverarbeitungssystem in einem kodierten Format erzeugt, verarbeitet und/oder zumindest temporär gespeichert wird und wobei die Logdatei einen Kopf und eine Nutzlast umfasst, werden die folgenden Verfahrensschritte ausgeführt:
- Einlesen von Kodierungsanweisungen in ein Kodierungsmodul;
- Durchführen einer Systemüberwachung und Erzeugen eines Stroms von Diagnosedaten mittels eines Diagnosemoduls während der Systemüberwachung;
- Einlesen des Stroms der Diagnosedaten in ein Kodierungsmodul;
- Erzeugen einer kodierten Logdatei durch Anwenden der Kodierungsanweisungen auf den Strom der Diagnosedaten durch das Kodierungsmodul;
- Einlesen der kodierten Logdatei in ein Dekodierungsmodul;
- Einlesen der Kodierungsanweisungen in das Dekodierungsmodul; und
- Erzeugen einer dekodierten Logdatei unter Berücksichtigung der Kodierungsanweisungen aus der kodierten Logdatei durch das Dekodierungsmodul; wobei
- das Kodierungsmodul dem Kopf der kodierten Logdatei einen Versionsbezeichner der verwendeten Kodierungsanweisungen zuweist;
- das Kodierungsmodul einen Protokolleintrag als Nutzlast an die kodierte Logdatei anhängt, wenn das Kodierungsmodul in den Diagnosedaten ein Protokollereignis erkennt, welches einen bestimmten Protokollparameter erstmalig betrifft oder welches eine Änderung des respektiven Protokollparameters beschreibt; und
- das Kodierungsmodul während der Systemüberwachung ein Speichern der kodierten Logdatei in ihrem aktuellen Zustand bewirkt, wenn das Kodierungsmodul einen Protokolleintrag an die kodierte Logdatei angehängt hat oder wenn eine festgelegte Zeitspanne ohne Anhängen eines weiteren Protokolleintrags abgelaufen ist.

Das erfindungsgemäße Verfahren ermöglicht es sämtliche während der Systemüberwachung zur protokollierenden Protokollparameter in der Logdatei zu erfassen und die Logdatei für spätere Analysezwecke auch im Falle eines unerwarteten Herunterfahrens des rechnergestützten Datenverarbeitungssystems bereitzustellen. Durch das Speichern der Logdatei in der kodierten Ausführung lasen sich die einzelnen Protokolleinträge so ausführen, dass sie mittels des Dekodierungsmoduls besonders schnell und einfach in der Logdatei aufgefunden werden. Hierdurch lässt sich der manuelle Aufwand zur Auswertung der Logdatei reduzieren.

Bei einem Datenverarbeitungssystem handelt es sich um ein informationstechnisches System. An der Verarbeitung der Logdateien kann ein oder mehrere rechnergestützte Datenverarbeitungssysteme beteiligt sein. Beispielsweise kann ein erstes Datenverarbeitungssystem von einem eingebetteten System, auch als Embedded System bezeichnet, ausgeführt sein. Das eingebettete System kann beispielsweise in ein Fahrzeug wie einen Pkw integriert sein. Beispielsweise kann es sich um ein Steuergerät zum Ansteuern einer Head-Unit handeln. Das Diagnosemodul überwacht dann dieses eingebettete System, wodurch sein Zustand erfasst und vom eingebetteten System verarbeitete Informationen in Form der Diagnosedaten ausgeleitet werden. Das Diagnosemodul kann Teil des eingebetteten Systems sein oder in ein weiteres Datenverarbeitungssystem integriert sein. Auch das weitere Datenverarbeitungssystem kann Teil des Fahrzeugs sein oder temporär mit dem Fahrzeug verbunden sein, beispielsweise als ein über einen CAN-Bus eine USB-Schnittstelle oder eine Ethernetschnittstelle mit dem Fahrzeug verbundenes mobiles Endgerät, beispielsweise ein Tabletcomputer oder Laptop. Die Kodierungsanweisungen enthalten Informationen wie das Kodierungsmodul die Diagnosedaten verarbeiten soll, um die Logdatei in dem kodierten Format zu erzeugen. Je nach Ausführung des zu überwachenden Datenverarbeitungssystems und der jeweils verarbeiteten Informationen bzw. der zu überwachenden Protokollparameter können die Kodierungsanweisungen unterschiedlich ausgestaltet sein. Die Kodierungsanweisungen lassen sich somit als datenverarbeitungssystemspezifisch bezeichnen.

Die kodierte Logdatei wird dann mittels des Dekodierungsmoduls unter Berücksichtigung derselben Kodierungsanweisungen dekodiert. Das Dekodierungsmodul kann Teil des eingebetteten Systems oder auch Teil eines weiteren Datenverarbeitungssystems sein. Beispielsweise wird das Dekodierungsmodul von einem Entwicklersystem bereitgestellt oder wird auf diesem ausgeführt. Bei dem Entwicklersystem kann es sich beispielsweise um einen Personal Computer handeln. Jegliche im vorigen erwähnten Module können hardwareseitig, softwareseitig oder als Kombinationen von Hardware und Software ausgeführt sein.

Die vom Kodierungsmodul erzeugte kodierte Logdatei enthält einen Kopf und einen an den Kopf angehängte Nutzlast. Der Kopf umfasst dabei einen Versionsbezeichner der verwendeten Kodierungsanweisungen. Dies erlaubt es dem Dekodierungsmodul beim Dekodieren der kodierten Logdatei zu entscheiden welche Kodierungsanweisungen zum Dekodieren der kodierten Logdatei herangezogen werden sollen. Der Kopf der kodierten Logdatei stellt somit einen unabhängig von der Systemüberwachung gleichartig ausgestalteten Bestandteil der Logdatei dar. Es werden dann neue Einträge in die Logdatei vom Kodierungsmodul angehängt, wenn eine Analyse der Diagnosedaten durch das Kodierungsmodul ergibt, dass ein neuer zu protokollierender Protokollparameter erstmalig einen Wert oder einen geänderten Wert liefert. Hierzu erkennt das Kodierungsmodul in den Diagnosedaten das Auftreten von Protokollereignissen. Ein solches Protokollereignis kann auch als sogenannter Function-Call bezeichnet werden. Beispiele hierfür sind das Starten oder Beenden des Datenverarbeitungssystems, das Laden einer bestimmten Software, eine Änderung eines Sensorwerts, welcher vom Datenverarbeitungssystem erfasst und verarbeitet wird, das Abschließen einer Aufgabe oder dergleichen. Bei den einzelnen Protokollparametern kann es sich um beliebige Parameter handeln, welche einen Zustand des Datenverarbeitungssystems beschreiben oder um einen solchen Parameter, welcher eine vom Datenverarbeitungssystem verarbeitete Information beschreibt. Beispiele für Protokollparameter sind eine Systemzeit, ein Datum, ein Zündungsstatus eines Fahrzeugs, eine Empfangssignalstärke, ein Geschwindigkeitswert, ein Massenstrom, eine IP-Adresse oder dergleichen.

Die vom Kodierungsmodul erzeugte kodierte Logdatei kann in einem beliebigen Datenverarbeitungssystem gespeichert werden. Beispielsweise kann die kodierte Logdatei auf einem physischen Speichermedium im selben Datenverarbeitungssystem, in dem auch das Kodierungsmodul enthalten ist, gespeichert werden oder auch von diesem Datenverarbeitungssystem an ein weiteres Datenverarbeitungssystem übertragen werden. Diese Übertragung kann drahtlos oder auch kabelgebunden erfolgen. Hierzu kommen beliebige Kommunikationstechnologien wie Ethernet, eine USB-Verbindung, WIFI, Bluetooth, NFC, ZigBee oder dergleichen in Frage.

Dadurch, dass nur dann Protokolleinträge als Nutzlast an die Logdatei angehängt werden, wenn ein Protokollereignis das erstmalige Auftreten eines jeweiligen Protokollparameters oder das Ändern eines entsprechenden Werts des jeweiligen Protokollparameters erkennen lässt, lässt sich eine Dateigröße der kodierten Logdatei besonders gering halten. Dies gewährleistet eine effiziente Nutzung von Rechenressourcen.

Die kodierte Logdatei wird immer dann erneut gespeichert, wenn ein neuer Protokolleintrag an die kodierte Logdatei angehängt wird oder aber nach Ablaufen der festgelegten Zeitspanne. Die festgelegte Zeitspanne kann beliebig gewählt werden und ein festes Zeitintervall sein, beispielsweise fünf Millisekunden, eine Sekunde oder fünf Minuten oder auch eine adaptive Zeitspanne sein, wie eine in Abhängigkeit eines Protokollparameters oder Protokollereignisses variabel ausgeführte Zeitspanne. Durch das häufige Speichern der kodierten Logdatei, also das Schreiben der kodierten Logdatei in ein persistentes Speichermedium, lässt sich gewährleisten, dass die kodierte Logdatei auch nach einem ungeplanten Herunterfahren oder Absturz des Datenverarbeitungssystems die kodierte Logdatei für weitere Analysezwecke zur Verfügung steht.

Insbesondere handelt es sich bei der kodierten Logdatei um eine Textdatei, in welcher der Kopf und die Nutzlast als alphanumerische Zeichenkette, gegebenenfalls ergänzt durch Sonderzeichen und/oder mathematische Symbole oder dergleichen, abgelegt sind. Das Dekodierungsmodul kann dann die Textdatei einlesen und diese in ein anderes Format wandeln. Beispielsweise kann das Dekodierungsmodul eine Tabelle aus der kodierten Logdatei erzeugen. Treten in der entsprechenden Tabelle einzelne Protokollparameter zum ersten Mal auf oder ändern sich, so kann ein entsprechender Zelleneintrag für den Protokollparameter zu einem bestimmten Zeitpunkt hervorgehoben werden, beispielsweise farblich markiert. Dies erleichtert eine manuelle Auswertung der Logdatei.

Eine vorteilhafte Weiterbildung des Verfahrens sieht vor, dass
- eine erste kodierte Logdatei nach ihrer Erzeugung während einer ersten Systemüberwachung zumindest temporär im Datenverarbeitungssystem zwischengespeichert wird; und
- das Kodierungsmodul bei der Erzeugung einer zweiten kodierten Logdatei während einer zweiten Systemüberwachung die erste kodierte Logdatei mit der zweiten kodierten Logdatei verkettet.

Es lassen sich somit zwei kodierte Logdateien zu einem gemeinsamen Log zusammenfügen. Dies ermöglicht es für den Fall eines Systemabsturzes nach einem erneuten Starten des Datenverarbeitungssystems die in der vorherigen Laufzeit bei der ersten Systemüberwachung protokollierten Informationen für eine Analyse bereitzustellen. So wird die erste kodierte Logdatei insbesondere zumindest während einer Abschaltzeit des Datenverarbeitungssystems bzw. des Diagnosemoduls und Kodierungsmoduls im jeweiligen Datenverarbeitungssystem gespeichert. Wird dann das Datenverarbeitungssystem wieder gestartet und während einer weiteren Laufzeit eine zweite Systemüberwachung ausgeführt, so wird die zweite kodierte Logdatei erzeugt, wobei die erste kodierte Logdatei mit der zweiten kodierten Logdatei verkettet wird. Verkettet bedeutet beispielsweise ein Voranstellen oder ein an das Ende der zweiten kodierten Logdatei Anhängen der ersten kodierten Logdatei.

Entsprechend einer weiteren vorteilhaften Ausgestaltung des Verfahrens werden in einer ersten Datenbank eine Vielzahl von unterschiedlich versionierten Kodierungsanweisungen vorgehalten. Die erste Datenbank kann Teil eines beliebigen Datenverarbeitungssystems sein. Die erste Datenbank kann also auch in dasselbe Datenverarbeitungssystem integriert sein wie das Diagnosemodul, das Kodierungsmodul und/oder das Dekodierungsmodul. Die erste Datenbank kann jedoch auch auf einem separaten Datenverarbeitungssystem bereitgestellt werden. Bei einem solchen separaten Datenverarbeitungssystem kann es sich beispielsweise um einen Server oder Serververbund handeln.

Während der Entwicklung von Hardware- und/oder Softwarekomponenten werden oftmals neue Softwareversionen erzeugt. Durch das Versionieren der Kodierungsanweisungen kann dem Rechnung getragen werden. Je nach Version der jeweiligen Hardware bzw. Software kann dann die jeweils passend versionierte Kodierungsanweisung zum Kodieren und Dekodieren der Logdatei verwendet werden. Beispielsweise kann sich die Hardware des vom Diagnosemodul überwachten Datenverarbeitungssystems ändern und/oder es können vom entsprechenden Datenverarbeitungssystem neue Parameter wie neue Sensordaten verarbeitet werden. Somit sind neue zu überwachende Protokollparameter vorzusehen. So kann eine neue Version der Kodierungsanweisungen erzeugt werden, welche auch diese neuen Protokollparameter umfasst.

Auch diese unterschiedlich versionierten Kodierungsanweisungen können diagnosemodulspezifisch ausgeführt sein.

Eine weitere vorteilhafte Ausgestaltung des erfindungsgemäßen Verfahrens sieht ferner vor, dass in einer zweiten Datenbank eine Vielzahl von Kodierungsanweisungsbausteinen vorgehalten werden, wobei das Datenverarbeitungssystem zur Erzeugung einer Kodierungsanweisung zumindest zwei Kodierungsanweisungsbausteine aus der zweiten Datenbank ausliest und zusammenfügt. Dies erleichtert das Vorgehen zur Bereitstellung unterschiedlicher Kodierungsanweisungen. Je nach überwachtem Datenverarbeitungssystem bzw. je nach Ausgestaltung des Diagnosemoduls können verschiedene unterschiedlich versionierte Kodierungsanweisungen gleiche Bestandteile umfassen. Diese können in der zweiten Datenbank vorgehalten werden, was das besonders schnelle und einfache Erzeugen von verschiedenen Kodierungsanweisungen, insbesondere unterschiedlich versionierten Kodierungsanweisungen, erlaubt. Auch die zweite Datenbank kann bevorzugt auf einem als Server oder Serververbund ausgeführten Datenverarbeitungssystem bereitgestellt werden. Auf diesen Server bzw. Serververbund können dann beispielsweise Programmierer zugreifen, die die jeweiligen Kodierungsanweisungen für die unterschiedlichen Datenverarbeitungssysteme und Diagnosemodule erzeugen.

Entsprechend einer weiteren vorteilhaften Ausgestaltung
- hängt das Kodierungsmodul beim erstmaligen Erwähnen eines bestimmten Protokollparameters durch ein Protokollereignis, den durch die Diagnosedaten beschriebenen Wert des Protokollparameters an die kodierte Logdatei als Protokolleintrag an;
- prüft das Kodierungsmodul vor jedem weiteren Anhängen eines den respektiven Protokollparameter betreffenden Protokolleintrags, ob der aktuelle Wert des Protokollparameters oder eine Differenz des aktuellen Werts zum vorherigen Wert eine geringere Dateigröße der kodierten Logdatei bedingt; und
- hängt das Kodierungsmodul als Protokolleintrag denjenigen Eintrag an die kodierte Logdatei an, welcher zur geringeren Dateigröße führt.

Hierdurch lässt sich der erforderliche Speicherplatz zum Speichern der kodierten Logdatei reduzieren. Eine entsprechend kodierte Logdatei kann dann über ein drahtloses oder kabelgebundenes Netzwerk auch schneller verschickt werden. Handelt es sich bei der Logdatei beispielsweise um besagte Textdatei, so ist eine besonders einfache und schnelle Überprüfung durch das Kodierungsmodul möglich, ob der Wert oder die Differenz zwischen aktuellem und vorherigem Wert zu einer geringeren Dateigröße führt. So ist lediglich die Zeichenanzahl des Werts bzw. der Differenz zu vergleichen. Es wird dann der Wert bzw. die Differenz gewählt, die die geringere Zeichenanzahl bedingt.

Eine weitere vorteilhafte Ausgestaltung des erfindungsgemäßen Verfahrens sieht ferner vor, dass das Kodierungsmodul eine Rechenvorschrift auf einen an die kodierte Logdatei anzuhängenden Protokolleintrag anwendet und den verrechneten Protokolleintrag an die kodierte Logdatei anhängt. Hierdurch lässt sich der Speicherbedarf zum Speichern der kodierten Logdatei noch weiter reduzieren. Bei der Rechenvorschrift kann es sich um eine beliebige Formel handeln. Handelt es sich bei dem Protokollparameter beispielsweise um eine IP-Adresse, so kann diese mittels der Rechenvorschrift in ein Hex-Format gewandelt werden. Somit lässt sich eine IP-Adresse ohne Punkte von 15 Zeichen auf acht Zeichen reduzieren. Dieses Vorgehen lässt sich mit dem Erzeugen von Hashwerten mittels einer Hashfunktion vergleichen. Generell kann jeder erdenkliche Protokollparameter bzw. Protokolleintrag beliebig gewandelt werden. Dies erlaubt es auch die kodierte Logdatei zu verschlüsseln, sodass ein Angreifer ohne die entsprechenden Kodierungsanweisungen nicht aus der kodierten Logdatei zu einer dekodierten Logdatei gelangen kann.

Entsprechend einer weiteren vorteilhaften Ausgestaltung des Verfahrens überprüft das Kodierungsmodul die Protokollereignisse auf die Existenz eines Löschereignisses und entfernt bei Erkennen eines Löschereignisses für die im Löschereignis erwähnten Protokollparameter sämtliche die respektiven Protokollparameter betreffenden Protokolleinträge aus der kodierten Logdatei. Bei dem Löschereignis handelt es sich um ein bestimmtes Protokollereignis. In den Kodierungsanweisungen kann festgelegt werden welche Protokollereignisse als Löschereignis aufzufassen sind und entsprechend welche Protokollparameter aus der kodierten Logdatei zu entfernen sind. Beispielsweise kann als Löschereignis vorgesehen sein, dass eine bestimmte Anzahl an Protokollereignissen festgestellt wurde, oder ein bestimmter Protokollparameter einen bestimmten Wert liefert. Auch kann das Ablaufen eines vorgegebenen Zeitraums ein Löschereignis darstellen. Insbesondere wird dann ein Löschereignis vorgegeben, wenn sichergestellt werden kann, dass für weitere Analysezwecke die entsprechend zu löschenden Protokollparameter nicht mehr benötigt werden. Hierdurch lässt sich die Dateigröße der kodierten Logdatei verringern.

Eine weitere vorteilhafte Ausgestaltung des Verfahrens sieht ferner vor, dass eine maximale Größe für die kodierte Logdatei vorgegeben wird und bei Erreichen der maximalen Größe der kodierten Logdatei das Kodierungsmodul nach dem letzten Speichern der kodierten Logdatei mit der Erzeugung einer zweiten kodierten Logdatei beginnt oder keine weitere Logdatei zumindest für diese Systemüberwachung erzeugt. Die maximale Größe für die kodierte Logdatei kann in verschiedenen Formaten definiert sein, beispielsweise als Dateigröße, also beispielsweise in Kilobyte, Megabyte, Gigabyte oder dergleichen, oder auch als Stringlänge, maximale Anzahl an Einträgen oder dergleichen. Ist die maximale Größe für die kodierte Logdatei erreicht, so kann eine weitere kodierte Logdatei von vorne begonnen werden oder das Logging pausiert bzw. beendet werden.

Entsprechend einer weiteren vorteilhaften Ausgestaltung des erfindungsgemäßen Verfahrens wird eine maximale Anzahl an Protokolleinträgen für einen bestimmten Protokollparameter für eine kodierte Logdatei vorgegeben, wobei bei Erreichen der maximalen Anzahl für diesen Protokollparameter beim erneuten Anhängen eines respektiven Protokolleintrags an die kodierte Logdatei der jeweils älteste Protokolleintrag durch den jeweils aktuellsten Protokolleintrag des Protokollparameters überschrieben wird. Dies ermöglicht es die Dateigröße der kodierten Logdatei trotz fortschreitender Protokollierung konstant zu halten, und dennoch aktuelle Protokollereignisse zu erfassen. Ältere, insbesondere nicht mehr relevante Protokollereignisse und entsprechende Protokolleinträge werden dann aus der kodierten Logdatei entfernt.

Erfindungsgemäß ist ein Datenverarbeitungssystem zur Durchführung eines im vorigen beschriebenen Verfahrens eingerichtet. Wie bereits erwähnt kann es sich bei dem Datenverarbeitungssystem um ein beliebig ausgestaltetes informationstechnisches System wie ein eingebettetes System, ein mobiles Endgerät, einen Personal Computer, einen Server, einen Quantencomputer oder dergleichen handeln. Es können bevorzugt mehrere Datenverarbeitungssysteme zur Umsetzung des erfindungsgemäßen Verfahrens genutzt werden. Die Datenverarbeitungssysteme sind dabei insbesondere miteinander vernetzt. Ein Datenverarbeitungssystem kann dabei auch simuliert oder emuliert werden, beispielsweise auf einer virtuellen Maschine.

Erfindungsgemäß umfasst ein Fahrzeug ein im vorigen beschriebenes Datenverarbeitungssystem. Dies ermöglicht es mit Hilfe des erfindungsgemäßen Verfahrens das Systemverhalten von in Fahrzeugen verwendeten Rechensystemen, beispielsweise ein Steuergerät eines Fahrzeuguntersystems, zu überprüfen.

Weitere vorteilhafte Ausgestaltungen des erfindungsgemäßen Verfahrens zum Verarbeiten von Logdateien und des Datenverarbeitungssystems ergeben sich auch aus den Ausführungsbeispielen, welche nachfolgend unter Bezugnahme auf die Figuren näher beschrieben werden.

Dabei zeigen:
- Fig. 1: einen Aufbau eines oder mehrere zur Durchführung eines erfindungsgemäßen Verfahrens verwendeter Datenverarbeitungssysteme;
- Fig. 2: eine schematisierte Darstellung einer Arbeitsweise eines Kodierungsmoduls; und
- Fig. 3: ein Ablaufdiagramm der Arbeitsweise des Kodierungsmoduls.

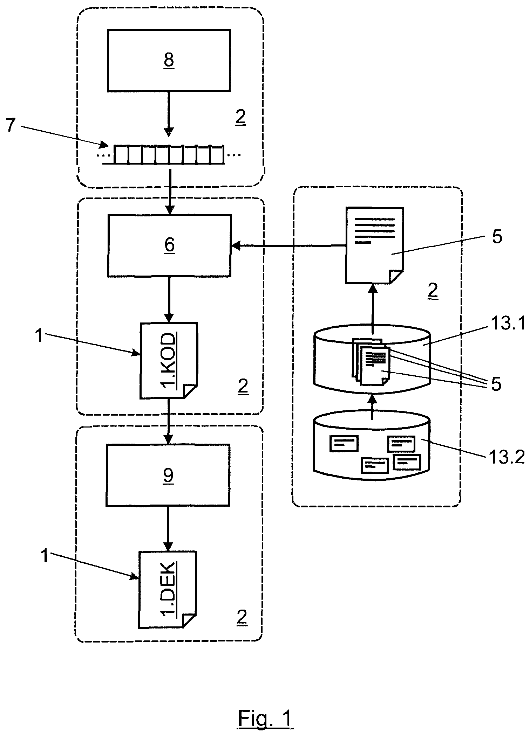

Ein erfindungsgemäßes Verfahren beschreibt das Verarbeiten von Logdateien 1 mittels eines oder mehrerer Datenverarbeitungssysteme 2. In dem in Figur 1 gezeigten Ausführungsbeispiel ist ein Diagnosemodul 8 in ein erstes Datenverarbeitungssystem 2 integriert, ein Kodierungsmodul 6 in ein zweites Datenverarbeitungssystem 2 integriert, ein Dekodierungsmodul 9 in ein drittes Datenverarbeitungssystem 2 integriert und eine erste Datenbank 13.1 und eine zweite Datenbank 13.2 in ein viertes Datenverarbeitungssystem 2 integriert. Generell wäre es auch möglich, dass sämtliche Module 8, 6, 9 sowie die beiden Datenbanken 13.1 und 13.2 in ein gemeinsames Datenverarbeitungssystem 2 integriert sein können. Es ist jede erdenkliche Verteilung der Module 8, 6, 9 sowie der Datenbanken 13.1 und 13.2 auf eine beliebige Anzahl an Datenverarbeitungssystem 2 möglich. Besonders bevorzugt sind das Diagnosemodul 8 und das Kodierungsmodul 6 in ein gemeinsames Datenverarbeitungssystem 2 integriert (nicht dargestellt).

Das Diagnosemodul 8 führt eine Systemüberwachung des Datenverarbeitungssystems 2 aus in welches es integriert ist. Das Diagnosemodul 8 liefert dann einen Strom 7 an Diagnosedaten zur Auswertung für das Kodierungsmodul 6. Unter Berücksichtigung von Kodierungsanweisungen 5 erzeugt das Kodierungsmodul 6 dann aus diesem Strom 7 an Diagnosedaten eine kodierte Logdatei 1.KOD. Diese kodierte Logdatei 1.KOD wird vom Dekodierungsmodul 9 eingelesen und ebenfalls unter Berücksichtigung der Kodierungsanweisungen 5 zu einer dekodierten Logdatei 1.DEK gewandelt.

Die ersten Datenbank 13.1 kann dabei eine Vielzahl unterschiedlich versionierter Kodierungsanweisungen 5 enthalten. Die zweite Datenbank 13.2 kann Kodierungsanweisungsbausteine enthalten, welche zu neuen Kodierungsanweisungen 5 zusammengefügt werden können.

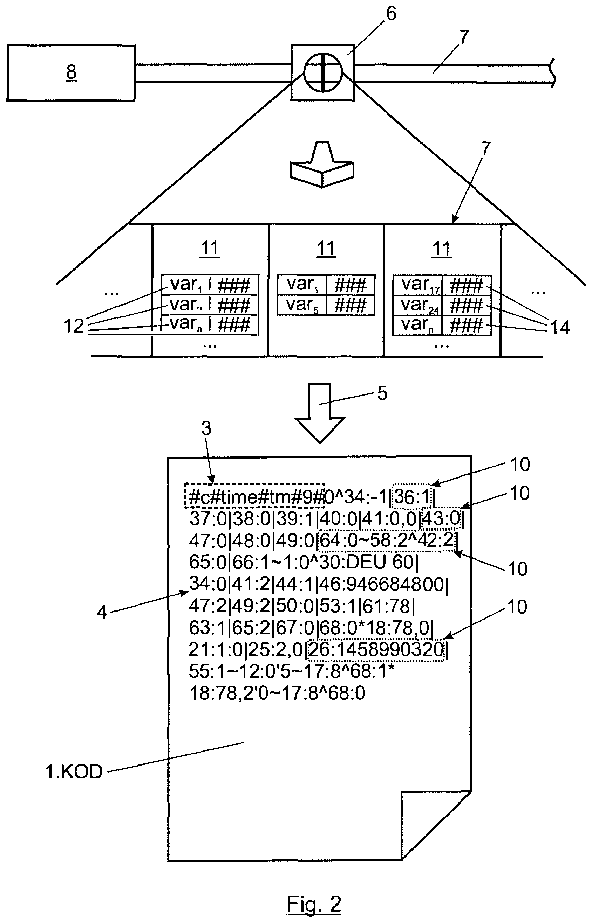

Figur 2 symbolisiert in einer schematisierten Darstellung die Arbeitsweise des Kodierungsmoduls 6. So verarbeitet das Kodierungsmodul 6 den vom Diagnosemodul 8 empfangenen Strom 7 an Diagnosedaten. Hierzu zählen beispielsweise Zustandswerte die den Systemzustand des vom Diagnosemodul 8 überwachten Datenverarbeitungssystems 2 beschreiben und/oder vom entsprechenden Datenverarbeitungssystem 2 erfasste und/oder sonst wie verarbeitete (Sensor-)Daten. Der Strom 7 der Diagnosedaten lässt sich als Aneinanderreihung von Protokollereignissen 11 verstehen, wobei jedes Protokollereignis 11 für einen jeweiligen Protokollparameter 12 einen jeweiligen Wert 14 des Protokollparameters 12 umfasst. Je nach Ausführung der verwendeten Hardware und/oder Software kann es vorgesehen sein, dass in einem jeweiligen Protokollereignis 11 im Strom 7 an Diagnosedaten immer sämtliche vorhandenen Protokollparameter 12 aufgelistet werden, oder nur solche Protokollparameter 12, die einen geänderten Wert 14 anzeigen.

Unter Berücksichtigung der Kodierungsanweisungen 5 wandelt das Kodierungsmodul 6 diese Informationen in die kodierte Logdatei 1.KOD um. Die kodierte Logdatei 1.KOD umfasst einen Kopf 3, welcher einen Versionsbezeichner der verwendeten Kodierungsanweisungen 5 beschreibt sowie eine Nutzlast 4, welche eine Aneinanderreihung der jeweils protokollierten Protokolleinträge 10 umfasst. Beispielsweise handelt es sich bei der kodierten Logdatei 1.KOD um eine Textdatei und um somit bei dem Kopf 3 und die Nutzlast 4 um eine entsprechende in der Textdatei gespeicherte Zeichenkette. Diese Zeichenkette kann beliebige Kombinationen aus Ziffern, Buchstaben, Sonderzeichen und mathematischen Symbolen und dergleichen umfassen. Zur Wahrung der Übersicht sind nur einige der Protokolleinträge 10 mit Bezugszeichen versehen. Die jeweiligen Protokolleinträge 10 sind in dem in Figur 2 gezeigten Ausführungsbeispiel durch vertikale Striche zueinander abgegrenzt. Generell könnten hierzu jedoch auch andere Zeichen bzw. Symbole verwendet werden oder eine fixe Zeichenlänge.

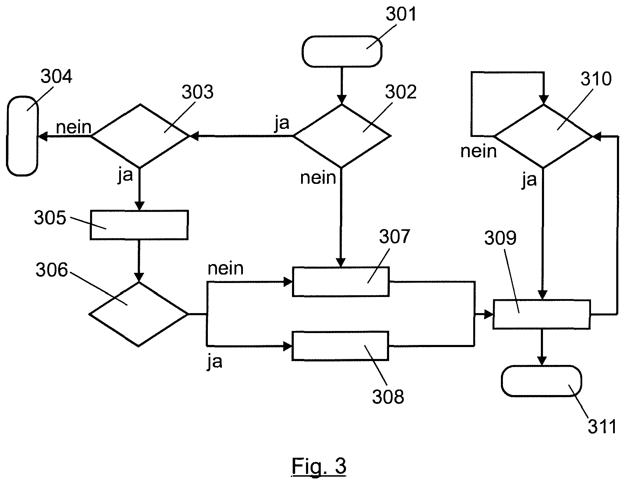

Figur 3 zeigt ein Ablaufdiagramm der Arbeitsweise des Kodierungsmoduls 6.

In einem Schritt 301 beginnt das Verfahren, indem das Kodierungsmodul 6 den Strom 7 an Diagnosedaten analysiert und das Vorhandensein von Protokollereignissen 11 mit respektiven Protokollparametern 12 und jeweiligen Werten 14 erkennt.

Im Schritt 302 überprüft das Kodierungsmodul 6 iterationsweise für jedes Protokollereignis 11, ob in dem Strom 7 der Diagnosedaten für einen jeweiligen Protokollparameter 12 ein Wert 14 erstmalig vorliegt oder bereits Werte 14 protokolliert wurden. Hierzu kann das Kodierungsmodul 6 bspw. auch die kodierte Logdatei 1.KOD auslesen.

Ist dies der Fall, so wird im Schritt 303 geprüft, ob sich der Wert 14 zum vorigen Wert 14 geändert hat. Ist der Wert 14 konstant, so wird im Schritt 304 kein neuer Protokolleintrag 10 erzeugt. Hat sich der Wert 14 hingegen geändert, so wird im Schritt 305 die Differenz zwischen den beiden Werten 14 berechnet. Im Schritt 306 überprüft das Kodierungsmodul 6, ob der Wert 14 oder die Differenz aus dem aktuellen und jeweiligen vorigen Wert 14 eine geringere Größe der kodierten Logdatei 1.KOD bedingt, beispielsweise aufgrund einer geringeren Zeichenanzahl.

Enthält der Strom 7 der Diagnosedaten für einen bestimmten Protokollparameter 12 hingegen erstmalig einen Wert 14 bzw. führt der Wert 14 zu einer geringeren Dateigröße, so wird der Wert 14 im Schritt 307 als Anhang in eine in die kodierte Logdatei 1.KOD einzufügende Zeichenkette angehängt. Ist hingegen im Schritt 308 die Differenz aus dem aktuellen und dem vorigen Wert 14 kleiner, sprich führt zu einer geringeren Dateigröße, so wird diese Differenz als Anhang an die Zeichenkette angehängt.

Im Schritt 309 wird die Zeichenkette, bzw. eine als Protokolleintrag 10 an die Zeichenkette anzuhängende Information in die kodierte Logdatei 1.KOD geschrieben. Die kodierte Logdatei 1.KOD wird dann abgespeichert. Zusätzlich läuft ein Timer, wobei im Schritt 310 überprüft wird, ob der Timer abgelaufen ist. Ist dies der Fall, so wird erneut der Schritt 309 durchgeführt. Da keine neuen Zeichen in die Zeichenkette der kodierten Logdatei 1.KOD aufgenommen wurden, wird dann lediglich die kodierte Logdatei 1.KOD erneut gespeichert.

Im Schritt 311 kann auf die kodierte Logdatei 1.KOD für eine Analyse zugegriffen werden. Hierzu wird die kodierte Logdatei 1.KOD vom Dekodierungsmodul 9 dekodiert.

## Patentansprüche

1. Verfahren zum Verarbeiten von Logdateien (1) mit rechnergestützten Datenverarbeitungssystemen (2), wobei eine Logdatei (1) von einem Datenverarbeitungssystem (2) in einem kodierten Format erzeugt, verarbeitet und/oder zumindest temporär gespeichert wird, aufweisend die folgenden Verfahrensschritte:
- Durchführen einer Systemüberwachung und Erzeugen eines Stroms (7) von Diagnosedaten mittels eines Diagnosemoduls (8) während der Systemüberwachung; und
- Einlesen einer kodierten Logdatei (1.KOD) in ein Dekodierungsmodul (9); **dadurch gekennzeichnet, dass**
die Logdatei (1) einen Kopf (3) und eine Nutzlast (4) umfasst sowie die folgenden Verfahrensschritte ausgeführt werden:
- Einlesen von Kodierungsanweisungen (5) in ein Kodierungsmodul (6);
- Einlesen des Stroms (7) der Diagnosedaten in das Kodierungsmodul (6);
- Erzeugen der kodierten Logdatei (1.KOD) durch Anwenden der Kodierungsanweisungen (5) auf den Strom (7) der Diagnosedaten durch das Kodierungsmodul (6);
- Einlesen der Kodierungsanweisungen (5) in das Dekodierungsmodul (9); und
- Erzeugen einer dekodierten Logdatei (1.DEK) unter Berücksichtigung der Kodierungsanweisungen (5) aus der kodierten Logdatei (1.KOD) durch das Dekodierungsmodul (9); wobei
- das Kodierungsmodul (6) dem Kopf (3) der kodierten Logdatei (1.KOD) einen Versionsbezeichner der verwendeten Kodierungsanweisungen (5) zuweist;
- das Kodierungsmodul (6) einen Protokolleintrag (10) als Nutzlast (4) an die kodierte Logdatei (1.KOD) anhängt, wenn das Kodierungsmodul (6) in den Diagnosedaten ein Protokollereignis (11) erkennt, welches einen bestimmten Protokollparameter (12) erstmalig betrifft oder welches eine Änderung des respektiven Protokollparameters (12) beschreibt; und
- das Kodierungsmodul (6) während der Systemüberwachung ein Speichern der kodierten Logdatei (1.KOD) in ihrem aktuellen Zustand bewirkt, wenn das Kodierungsmodul (6) einen Protokolleintrag (10) an die kodierte Logdatei (1.KOD) angehängt hat oder wenn eine festgelegte Zeitspanne ohne Anhängen eines weiteren Protokolleintrags (10) abgelaufen ist.

2. Verfahren nach Anspruch 1,
**dadurch gekennzeichnet, dass**
- eine erste kodierte Logdatei (1.KOD) nach ihrer Erzeugung während einer ersten Systemüberwachung zumindest temporär im Datenverarbeitungssystem (2) zwischengespeichert wird; und
- das Kodierungsmodul (6) bei der Erzeugung einer zweiten kodierten Logdatei (1.KOD) während einer zweiten Systemüberwachung die erste kodierte Logdatei (1.KOD) mit der zweiten kodierten Logdatei (1.KOD) verkettet.

3. Verfahren nach Anspruch 1 oder 2,
**dadurch gekennzeichnet, dass**
in einer ersten Datenbank (13.1) eine Vielzahl von unterschiedlich versionierten Kodierungsanweisungen (5) vorgehalten werden.

4. Verfahren nach Anspruch 3,
**dadurch gekennzeichnet, dass**
in einer zweiten Datenbank (13.2) eine Vielzahl von Kodierungsanweisungsbausteinen vorgehalten werden, wobei das Datenverarbeitungssystem (2) zur Erzeugung einer Kodierungsanweisung (5) zumindest zwei Kodierungsanweisungsbausteine aus der zweiten Datenbank (13.2) ausliest und zusammenfügt.

5. Verfahren nach einem der Ansprüche 1 bis 4,
**dadurch gekennzeichnet, dass**
- das Kodierungsmodul (6) beim erstmaligen Erwähnen eines bestimmten Protokollparameters (12) durch ein Protokollereignis (11), als Protokolleintrag (10) den durch die Diagnosedaten beschriebenen Wert (14) des Protokollparameters (12) an die kodierte Logdatei (1.KOD) anhängt;
- das Kodierungsmodul (6) vor jedem weiteren Anhängen eines den respektiven Protokollparameter (12) betreffenden Protokolleintrags (10) prüft, ob der aktuelle Wert (14) des Protokollparameters (12) oder eine Differenz des aktuellen Werts (14) zum vorherigen Wert eine geringere Dateigröße der kodierten Logdatei (1.KOD) bedingt; und
- das Kodierungsmodul (6) als Protokolleintrag (10) denjenigen Eintrag an die kodierte Logdatei (1.KOD) anhängt, welcher zur geringeren Dateigröße führt.

6. Verfahren nach einem der Ansprüche 1 bis 5,
**dadurch gekennzeichnet, dass**
das Kodierungsmodul (6) eine Rechenvorschrift auf einen an die kodierte Logdatei (1.KOD) anzuhängenden Protokolleintrag (10) anwendet und den verrechneten Protokolleintrag an die kodierte Logdatei (1.KOD) anhängt.

7. Verfahren nach einem der Ansprüche 1 bis 6,
**dadurch gekennzeichnet, dass**
das Kodierungsmodul (6) die Protokollereignisse (11) auf die Existenz eines Löschereignisses überprüft und bei Erkennen eines Löschereignisses für die im Löschereignis erwähnten Protokollparameter (12) sämtliche die respektiven Protokollparameter (12) betreffenden Protokolleinträge (10) aus der kodierten Logdatei (1.KOD) entfernt.

8. Verfahren nach einem der Ansprüche 1 bis 7,
**dadurch gekennzeichnet, dass**
eine maximale Größe für die kodierte Logdatei (1.KOD) vorgegeben wird und bei Erreichen der maximalen Größe der kodierten Logdatei (1.KOD) das Kodierungsmodul (6) nach dem letzten Speichern der kodierten Logdatei (1.KOD) mit der Erzeugung einer zweiten kodierten Logdatei beginnt oder keine weitere Logdatei (1) zumindest für diese Systemüberwachung erzeugt.

9. Verfahren nach einem der Ansprüche 1 bis 8,
**dadurch gekennzeichnet, dass**
eine maximale Anzahl an Protokolleinträgen (10) für einen bestimmten Protokollparameter (12) für eine kodierte Logdatei (1.KOD) vorgegeben wird, wobei bei Erreichen der maximalen Anzahl für diesen Protokollparameter (12) beim erneuten Anhängen eines respektiven Protokolleintrags (10) an die kodierte Logdatei (1.KOD), der jeweils älteste Protokolleintrag durch den jeweils aktuellsten Protokolleintrag des Protokollparameters (12) überschrieben wird.

10. Datenverarbeitungssystem (2),
**gekennzeichnet durch**
eine Einrichtung zur Durchführung eines Verfahrens nach einem der Ansprüche 1 bis 9.

11. Fahrzeug,
**gekennzeichnet durch**
ein Datenverarbeitungssystem (2) nach Anspruch 10.

## Claims

1. Method for processing log files (1) using computer-aided data processing systems (2), a log file (1) being generated, processed and/or at least temporarily stored by a data processing system (2) in a coded format, having the following method steps:
- performing system monitoring and generating a stream (7) of diagnostic data by means of a diagnostic module (8) during the system monitoring; and
- reading a coded log file (1.KOD) into a decoding module (9);
**characterized in that**
the log file (1) comprises a header (3) and a payload (4) and the following method steps are carried out:
- reading coding instructions (5) into a coding module (6);
- reading the stream (7) of diagnostic data into the coding module (6);
- generating the coded log file (1.KOD) by applying the coding instructions (5) to the stream (7) of diagnostic data by the coding module (6);
- reading the coding instructions (5) into the decoding module (9); and
- generating a decoded log file (1.DEK) taking into account the coding instructions (5) from the coded log file (1.KOD) by the decoding module (9);
- the coding module (6) assigning a version identifier of the coding instructions (5) used to the header (3) of the coded log file (1.KOD);
- the coding module (6) appending a protocol entry (10) as a payload (4) to the coded log file (1.KOD) if the coding module (6) detects a protocol event (11) in the diagnostic data which affects a specific protocol parameter (12) for the first time or which describes a change in the particular protocol parameter (12); and
- the coding module (6) causing the coded log file (1.KOD) to be stored in its current state during the system monitoring if the coding module (6) has appended a protocol entry (10) to the coded log file (1.KOD) or if a specified period of time has elapsed without appending a further protocol entry (10).

2. Method according to claim 1,
**characterized in that**
- a first coded log file (1.KOD) is buffered at least temporarily in the data processing system (2) after its generation during a first system monitoring; and
- the coding module (6), when a second coded log file (1.KOD) is generated during a second system monitoring, concatenates the first coded log file (1.KOD) with the second coded log file (1.KOD).

3. Method according to claim 1 or 2,
**characterized in that**
a plurality of differently versioned coding instructions (5) are kept in a first database (13.1).

4. Method according to claim 3,
**characterized in that**
a plurality of coding instruction modules are kept in a second database (13.2), the data processing system (2) reading out and combining at least two coding instruction modules from the second database (13.2) to generate a coding instruction (5).

5. Method according to any of claims 1 to 4,
**characterized in that**
- the coding module (6), when a specific protocol parameter (12) is mentioned for the first time by a protocol event (11), appends the value (14) of the protocol parameter (12) described by the diagnostic data to the coded log file (1.KOD) as a protocol entry (10);
- the coding module (6) checks, before each further appending of a protocol entry (10) relating to the particular protocol parameter (12), whether the current value (14) of the protocol parameter (12) or a difference between the current value (14) and the previous value results in a smaller file size of the coded log file (1.KOD); and
- the coding module (6) appends as a protocol entry (10) the entry to the coded log file (1.KOD) which leads to the smaller file size.

6. Method according to any of claims 1 to 5,
**characterized in that**
the coding module (6) applies a calculation rule to a protocol entry (10) to be appended to the coded log file (1.KOD) and appends the calculated protocol entry to the coded log file (1.KOD).

7. Method according to any of claims 1 to 6,
**characterized in that**
the coding module (6) checks the protocol events (11) for the existence of a deletion event and, upon detection of a deletion event for the protocol parameters (12) mentioned in the deletion event, removes all protocol entries (10) relating to the respective protocol parameters (12) from the coded log file (1.KOD).

8. Method according to any of claims 1 to 7,
**characterized in that**
a maximum size for the coded log file (1.KOD) is specified and when the maximum size of the coded log file (1.KOD) is reached, the coding module (6) starts generating a second coded log file after the last saving of the coded log file (1.KOD) or does not generate any further log file (1) at least for this system monitoring.

9. Method according to any of claims 1 to 8,
**characterized in that**
a maximum number of protocol entries (10) for a specific protocol parameter (12) is specified for a coded log file (1.KOD), the oldest protocol entry, when the maximum number for this protocol parameter (12) is reached when a particular protocol entry (10) is appended again to the coded log file (1.KOD), being overwritten by the most recent protocol entry of the protocol parameter (12).

10. Data processing system (2),
**characterized by**
a device for carrying out a method according to any of claims 1 to 9.

11. Vehicle,
**characterized by**
a data processing system (2) according to claim 10.

## Revendications

1. Procédé de traitement de fichiers journaux (1) avec des systèmes de traitement de données (2) assistés par ordinateur, dans lequel un fichier journal (1) est généré par un système de traitement de données (2) dans un format codé, traité et/ou mémorisé au moins temporairement, présentant les étapes de procédé suivantes :
- la réalisation d'une surveillance du système et la génération d'un flux (7) de données de diagnostic au moyen d'un module de diagnostic (8) pendant la surveillance du système ; et
- la lecture d'un fichier journal codé (1.KOD) dans un module de décodage (9) ; **caractérisé en ce que**
le fichier journal (1) comprend un en-tête (3) et une charge utile (4), et les étapes de procédé suivantes sont exécutées :
- la lecture d'instructions de codage (5) dans un module de codage (6) ;
- la lecture du flux (7) des données de diagnostic dans le module de codage (6) ;
- la génération du fichier journal codé (1.KOD) en appliquant les instructions de codage (5) au flux (7) de données de diagnostic par le module de codage (6) ;
- la lecture des instructions de codage (5) dans le module de décodage (9) ; et
- la génération d'un fichier journal décodé (1.DEK) en tenant compte des instructions de codage (5) à partir du fichier journal codé (1.KOD) par le module de décodage (9) ; dans lequel
- le module de codage (6) attribue à l'en-tête (3) du fichier journal codé (1.KOD) un identifiant de version des instructions de codage (5) utilisées ;
- le module de codage (6) ajoute une entrée de registre (10) en tant que charge utile (4) au fichier journal codé (1.KOD) lorsque le module de codage (6) reconnaît dans les données de diagnostic un événement de registre (11) qui concerne pour la première fois un paramètre de registre (12) déterminé ou qui décrit une modification du paramètre de registre (12) respectif ; et
- le module de codage (6) provoque, pendant la surveillance du système, une mémorisation du fichier journal codé (1.KOD) dans son état actuel, lorsque le module de codage (6) a ajouté une entrée de journal (10) au fichier journal codé (1.KOD) ou lorsqu'un laps de temps établi s'est écoulé sans ajout d'une autre entrée de registre (10).

2. Procédé selon la revendication 1,
**caractérisé en ce que**
- un premier fichier journal codé (1.KOD) est mémorisé temporairement au moins dans le système de traitement de données (2) après sa génération pendant une première surveillance du système ; et
- le module de codage (6), lors de la génération d'un second fichier journal codé (1.KOD) pendant une seconde surveillance du système, concatène le premier fichier journal codé (1.KOD) avec le second fichier journal codé (1.KOD).

3. Procédé selon la revendication 1 ou 2,
**caractérisé en ce que**
une pluralité d'instructions de codage (5) de versions différentes est conservée dans une première base de données (13.1).

4. Procédé selon la revendication 3,
**caractérisé en ce que**
une pluralité de blocs d'instructions de codage est conservée dans une seconde base de données (13.2), dans lequel le système de traitement de données (2) lit et assemble au moins deux blocs d'instructions de codage à partir de la seconde base de données (13.2) pour générer une instruction de codage (5).

5. Procédé selon l'une des revendications 1 à 4,
**caractérisé en ce que**
- le module de codage (6), lors de la mention pour la première fois d'un paramètre de registre (12) déterminé par un événement de registre (11), ajoute comme entrée de registre (10) la valeur (14) du paramètre de registre (12) décrite par les données de diagnostic au fichier de registre codé (1.KOD) ;
- le module de codage (6) vérifie, avant chaque ajout ultérieur d'une entrée de registre (10) concernant le paramètre de registre (12) respectif, si la valeur actuelle (14) du paramètre de registre (12) ou une différence de la valeur actuelle (14) par rapport à la valeur précédente conditionne une taille de fichier plus petite du fichier journal codé (1.KOD) ; et
- le module de codage (6) ajoute au fichier journal codé (1.KOD), en guise d'entrée de registre (10), l'entrée qui conduit à une taille de fichier plus petite.

6. Procédé selon l'une des revendications 1 à 5,
**caractérisé en ce que**
le module de codage (6) applique une règle de calcul à une entrée de registre (10) à ajouter au fichier journal codé (1.KOD) et ajoute l'entrée de registre calculée au fichier journal codé (1.KOD).

7. Procédé selon l'une des revendications 1 à 6,
**caractérisé en ce que**
le module de codage (6) vérifie les événements de registre (11) quant à l'existence d'un événement d'effacement et, en cas de reconnaissance d'un événement d'effacement pour les paramètres de registre (12) mentionnés dans l'événement d'effacement, supprime toutes les entrées de registre (10) concernant les paramètres de registre (12) respectifs du fichier journal codé (1.KOD).

8. Procédé selon l'une des revendications 1 à 7,
**caractérisé en ce que**
une taille maximale est prédéfinie pour le fichier journal codé (1.KOD) et, lorsque la taille maximale du fichier journal codé (1.KOD) est atteinte, le module de codage (6) commence à générer un second fichier journal codé après la dernière mémorisation du fichier journal codé (1.KOD) ou ne génère pas d'autre fichier journal (1) au moins pour cette surveillance du système.

9. Procédé selon l'une des revendications 1 à 8,
**caractérisé en ce que**
un nombre maximal d'entrées de registre (10) pour un paramètre de registre (12) déterminé est prédéfini pour un fichier journal codé (1.KOD), dans lequel l'entrée de registre respectivement la plus ancienne est écrasée par l'entrée de registre respectivement la plus actuelle du paramètre de registre (12) lorsque le nombre maximal est atteint pour ce paramètre de registre (12) lors d'un nouvel ajout d'une entrée de registre (10) respective au fichier journal codé (1.KOD).

10. Système de traitement de données (2),
**caractérisé par**
un dispositif pour la réalisation d'un procédé selon l'une des revendications 1 à 9.

11. Véhicule,
**caractérisé par**
un système de traitement de données (2) selon la revendication 10.
